Europäisches Patentamt

European Patent Office

Office européen des brevets

(11) Veröffentlichungsnummer: **0 081 734**
**B1**

(12) **EUROPÄISCHE PATENTSCHRIFT**

(45) Veröffentlichungstag der Patentschrift:
19.02.86

(51) Int. Cl.⁴: **B 29 C 65/02, B 29 C 65/76**

(21) Anmeldenummer: 82111019.4

(22) Anmeldetag: 29.11.82

(54) Vorrichtung zum Anbringen von Querschweissnähten oder Querschweisstrennähten an schlauch- oder halbschlauchförmigen Folienbahnen aus Kunststoff.

(30) Priorität: 01.12.81 DE 3147539
15.09.82 DE 3234227

(43) Veröffentlichungstag der Anmeldung:
22.06.83 Patentblatt 83/25

(45) Bekanntmachung des Hinweises auf die Patenterteilung:
19.02.86 Patentblatt 86/8

(84) Benannte Vertragsstaaten:
CH FR GB IT LI

(56) Entgegenhaltungen:
DE - C - 931 629
DE - C - 1 147 379

(73) Patentinhaber: Windmöller & Hölscher,
Münsterstrasse 48-52, D-4540 Lengerich i.W. (DE)

(72) Erfinder: Keller, Josef, Lessingstrasse 23,
D-4540 Lengerich (DE)
Erfinder: Eckhard, Walter, Brandenburger Strasse 4,
D-4550 Bramsche (DE)

(74) Vertreter: Lorenz, Eduard et al, Rechtsanwälte Lorenz, Eduard - Seidler, Bernhard Seidler, Margrit - Gossel, Hans-K. Philipps, Ina, Dr. Widenmayerstrasse 23,
D-8000 München 22 (DE)

## Beschreibung

Die Erfindung betrifft eine Vorrichtung nach dem Oberbegriff des Patentanspruchs 1.

Bei einer aus der DE-C-931 629 bekannten Vorrichtung zur Herstellung von heissverklebten Flachbeuteln wird ein Siegelschlitten von dem umlaufenden Kurbelzapfen einer Kurbel dadurch hin- und hergehend relativ zu einer kontinuierlich geförderten Folienbahn bewegt, dass der Kurbelzapfen in eine Kulissenführung eines schwenkbar gelagerten Hebels greift, der endseitig über eine Koppel mit dem Siegelschlitten verbunden ist. Durch diese Art des Antriebs ergibt sich eine sinusförmig hin- und hergehende Bewegung des Siegelschlittens, die sich nur kurzzeitig in etwa der Bahngeschwindigkeit anpassen lässt, so dass nur eine kurze Zeit zum Verschweissen der Bahnen ausgenutzt werden kann, die meist nicht ausreicht, um einwandfreie Siegelnähte zu erzeugen.

Bei einer aus der DE-C-11 47 379 bekannten Vorrichtung der eingangs angegebenen Art ist versucht worden, die Zeit des Gleichlaufs des Siegelschlittens mit der Folienbahn dadurch zu verlängern, dass der Zapfen einer umlaufenden Kurbel in der Kulissenführung des Arms eines schwenkbar gelagerten zweiarmigen Hebels geführt ist, dessen anderer Arm über Koppeln und Zwischenhebel gelenkig mit dem Siegelschlitten verbunden ist, wobei die Kulissenführung des einen Arms so ausgebildet ist, dass sich abweichend von einer sinusförmigen Bewegung ein möglichst langer Gleichlauf des Siegelschlittens mit der Folienbahn ergibt, und der Anlenkpunkt der Koppel auf dem anderen Arm veränderbar ist, um auf der Vorrichtung Beutel unterschiedlicher Breite herstellen zu können. Diese Vorrichtung weist nun den Nachteil auf, dass die Krümmung der Kulissenführung des einen Hebelarms nur für eine Beutelbreite der Gleichlaufbewegung des Siegelschlittens mit der Folienbahn optimal angepasst werden kann, weil für alle anderen Beutelbreiten der Anlenkpunkt der die Schwenkbewegung übertragenden Koppel auf dem anderen Hebelarm verändert werden muss, so dass entsprechend des Abstandes des Anlenkpunktes von der Schwenkachse des doppelarmigen Hebels die Koppel unterschiedlich grosse Schwenkbewegungen ausführt, die zur Übertragung von Bewegungen auf den Siegelschlitten führen, die untereinander nicht ähnlich sind. Die Gleichlaufphase des Siegelschlittens mit der Folienbahn wird also desto schlechter, je weiter der Anlenkpunkt der Koppel von dem Punkt auf dem Hebelarm entfernt ist, für den die Kulissenführung den besten Gleichlauf erzeugt.

Aufgabe der Erfindung ist es daher, eine Vorrichtung der eingangs angegebenen Art zu schaffen, bei der zur Erreichung eines möglichst langen Gleichlaufs der Schweisswerkzeuge mit der Folienbahn die relativen Bewegungsverhältnisse zwischen beiden bei allen möglichen Formateinstellungen zueinander proportional sind.

Erfindungsgemäss wird diese Aufgabe durch die in dem kennzeichnenden Teil des Patentanspruchs 1 angegebenen Merkmale gelöst.

Dadurch, dass der zweite Gleichstein geradlinig geführt ist, führt er während der Verschwenkung des Hebels relativ zu diesem eine die Bogenhöhe des Schwenkwinkels ausgleichende Radialbewegung aus.

Die beiden Gleitsteine sind adurch gleichsam auf einer Sehne des Schwenksektors geradlinig geführt. Durch den Ausgleich der Bogenhöhe infolge der erfindungsgemässen Geradführung lässt sich bei allen Formateinstellungen die Kurvencharakteristik der Kulissenführung proportional richtig auf die geänderten Bewegungsabläufe übertragen.

Mit dem mit einem der beiden Gleitsteine verbundenen, als Koppel ausgebildeten Hebel kann ein die Schweisseinrichtung tragender Schlitten verbunden sein, der von dieser in einer zu der gestellfesten Führung des zweiten Gleitsteins parallelen Führung hin- und herverschieblich ist.

Statt die Schweisseinrichtung oder Siegelstation auf einem verschieblichen Schlitten anzuordnen, ist es in der Praxis auch üblich, mit einer stationär angeordneten Siegelstation zu arbeiten. In diesem Falle wird die mit Querschweissnähten zu versehende Folienbahn im Bereich der Siegelstation intermittierend bewegt, wobei diese intermittierende Bewegung durch eine Bahnspeichereinrichtung bewirkt wird, so dass während der Schweisszeit die Bahn in der Siegelstation stillsteht. Die Bahnspeichereinrichtung ist dabei so zu steuern, dass die Bahn in den vor und hinter der Siegelstation angeordneten, kontinuierlich umlaufenden Vorzugswalzen keinerlei unterschiedliche Bewegungen ergeben, die Spannungen erzeugen würden. Aus diesem Grund müssen die Bahnspeichereinrichtungen so gesteuert werden, dass der stillstehende Teil der Bahn nach dem Schweissen möglichst schnell wieder auf Vorzugsrollengeschwindigkeit beschleunigt wird, ohne dass dabei Bahnspannungserhöhungen auftreten. Hierzu können Tänzerwalzen vorgesehen werden, die gegenläufig durch einen Zahnriemen oder dergleichen angetrieben werden, der seinen Antrieb zur Erzeugung eines exakten Bahnstillstands von dem mit einem der Gleitsteine verbundenen Hebel ableiten kann.

Nach einem anderen Vorschlag wird die gestellte Aufgabe durch die in dem kennzeichnenden Teil des Patentanspruchs 2 angegebenen Merkmale gelöst. Zur Bewegungsübertragung kann der Hebel mit einem die Schweisseinrichtung tragenden Schlitten oder aber mit einem Tänzerwalzen gegensinnig hebenden und senkenden Zahnriemen oder dergleichen verbunden sein.

Bei den erfindungsgemässen Vorrichtungen wird der Einfluss der bekannten schwenkbaren Schubkurbel dadurch ausgeschaltet, dass der Weg des Schubkurbelgelenks auf eine Gerade projiziert wird, die die Basis der erwähnten Dreiecke bildet. Damit werden die Bewegungs- und Geschwindigkeitsverhältnisse der unterschiedlichen Formateinstellungen zueinander proportional.

Vorteilhafte Ausgestaltungen der Erfindung sind in den Unteransprüchen näher beschrieben worden.

Zwei Ausführungsbeispiele der erfindungsgemässen Vorrichtung werden nachstehend anhand der Zeichnung näher erläutert. In dieser zeigt

Fig. 1 eine Seitenansicht eines Kurvenschleifengetriebes zum hin- und hergehenden Antrieb eines Siegelschlittens in schematischer Darstellung,

Fig. 2 einen Schnitt durch das Getriebe längs der Linie II–II in Fig. 1,

Fig. 3 eine Seitenansicht eines Kurvenscheibengetriebes zum hin- und hergehenden Antrieb eines Tänzerwalzen steuernden Zahnriemens in schematischer Darstellung und

Fig. 4 einen Schnitt durch das Getriebe gemäss der Linie IV–IV in Fig. 3.

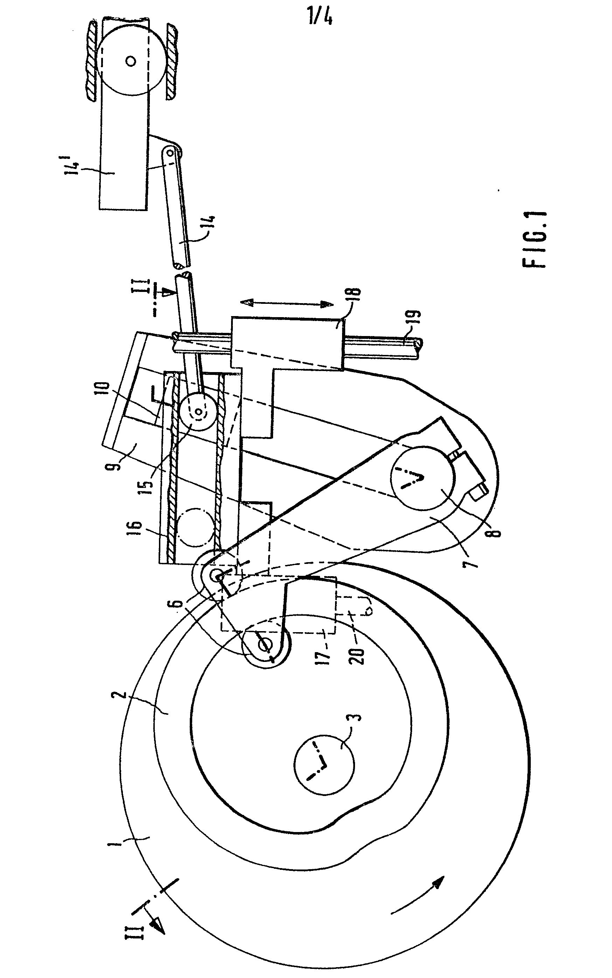

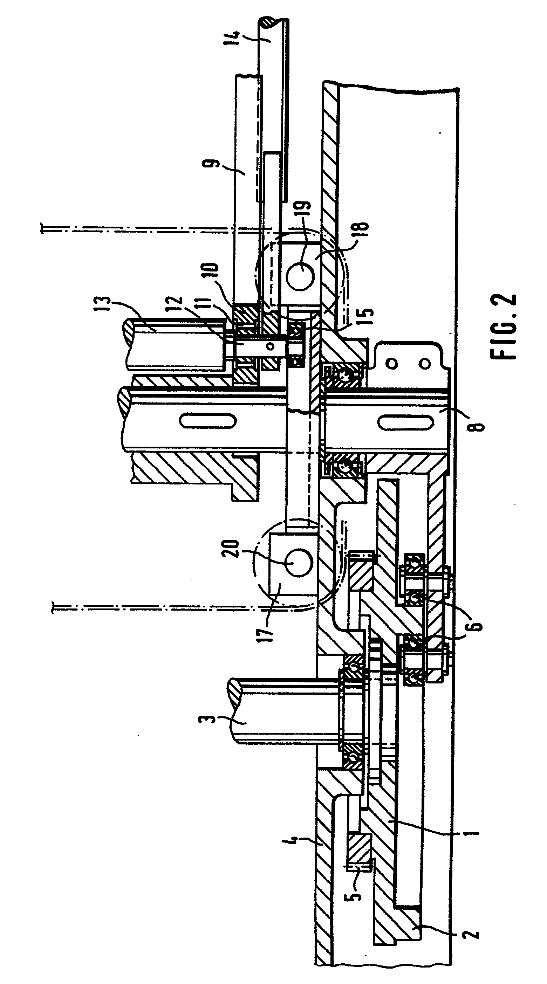

Bei der Ausführungsform nach den Fig. 1 und 2 ist eine Kurvenscheibe 1 mit einer Stegkurve 2 versehen. Die Kurvenscheibe 1 wird von einer Taktwelle 3 getragen, die drehbar in einer Gehäuseseitenwand 4 gelagert ist. Der Antrieb der Kurvenscheibe erfolgt über ein Zahnrad 5, das auf der Rückseite der Kurvenscheibe 1 mit dieser verbunden ist. Die Stegkurve 2 wird von einem Kurvenrollenpaar 6 abgegriffen, das an einem Kurvenrollenhebel 7 drehbar gelagert ist. Dieser Kurvenrollenhebel 7 ist auf eine Welle 8 aufgekeilt, die ebenfalls wie die Taktwelle 3 in der Gehäuseseitenwand 4 drehbar gelagert ist. Auf die Welle 8 ist des weiteren mit Abstand von dem Kurvenrollenhebel 7 ein Kulissenhebel 9 aufgekeilt, in dessen Kulisse ein Kulissenstein 10 geführt ist. Dieser Kulissenstein 10 weist eine Durchgangsbohrung 11 auf, durch die der Zapfen 12 einer Welle 13 einendig hindurchragt. Die Welle 13 dient lediglich dem Gleichlauf, weil auch auf der der Gehäuseseitenwand 4 gegenüberliegenden Seitenwand auf der durchgehenden Welle 8 ein weitere Kulissenhebel gelagert ist.

Der durch die Bohrung 11 hindurchragende Zapfen 12 trägt zum einen eine Verbindungsstange 14 und zum anderen eine Kulissenrolle 15. Diese Kulissenrolle 15 ist in einer Geradführung 16 gehalten, so dass sich bei der hin- und hergehenden Bewegung des Kulissenhebels 9 stets nur eine geradlinige Bewegung auf die Verbindungsstange 14 übertragen kann, so dass diese während jeder Bewegungsphase zu sich selbst parallel bleibt. Die Unregelmässigkeit der Bewegung der Verbindungsstange 14, die sich ergeben würde, wenn der Kulissenstein bzw. die Kulissenrolle nicht von einer Geradführung gehalten wäre, sind also eliminiert.

Wie insbesondere die Fig. 1 zeigt, wird die Geradführung von zwei heb- und senkbaren Konsolen 17 und 18 getragen, die ihrerseits zwecks Formatverstellung beispielsweise über nicht dargestellte hydraulische Kolbenzylindereinheiten an Führungen 19 und 20 auf- und abbewegbar sind. Da sich die Kurvenrolle 15 bei jeder beliebigen Formateinstellung auf einer Geraden bewegt, ergeben sich stets auch proportionale Bewegungsverhältnisse für die Verbindungsstange 14 und somit für den nur schematisch dargestellten Siegelschlitten 14'. Dies würde dann nicht der Fall sein, wenn die Geradführung 16 wegfiele und sich die Kulissenrolle auf einem Kreisbogen bewegen würde. Bei Formatverstellung ergäben sich dann nämlich unterschiedliche Kurvenhöhen, so dass für jedes Format dann eine andere Stegkurve eingesetzt werden müsste, um optimale Bewegungsverhältnisse am Siegelschlitten 14' erzeugen zu können.

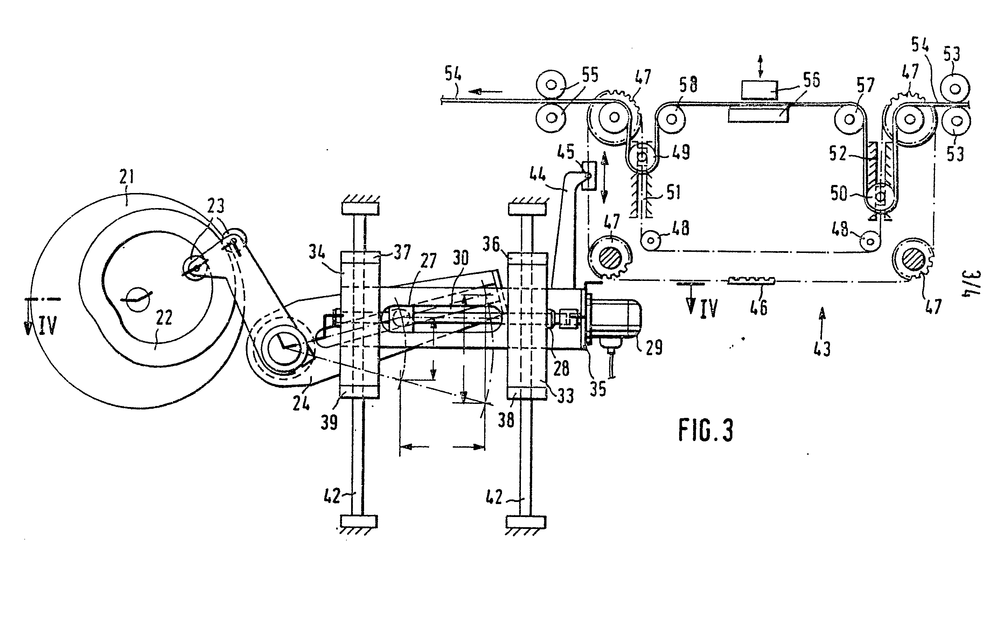

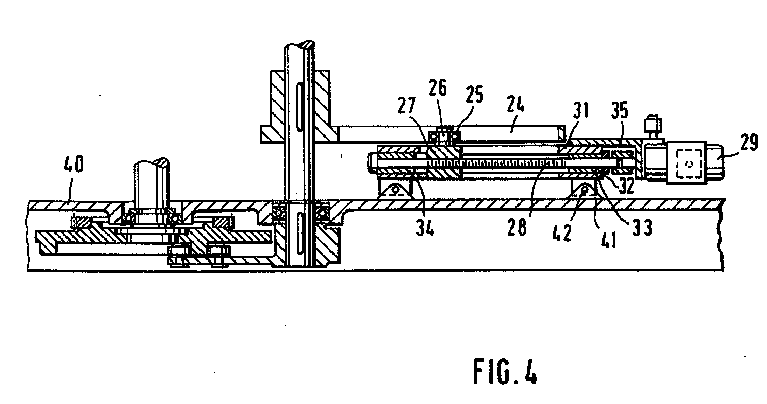

Gemäss dem Ausführungsbeispiel nach den Fig. 3 und 4 wird nicht mehr ein Siegelschlitten, sondern vielmehr werden die Lagerungen der Tänzer- oder Bahnausgleichswalzen 49, 50 in den Führungen 51, 52 des Walzenstuhls 43 einer Bahnspeichereinrichtung bewegt. Entsprechend der Fig. 1 und 2 wird auch bei diesem Ausführungsbeispiel über eine mit einer Stegkurve 22 besetzten Kurvenscheibe 21 und über Kurvenrollen 23 ein Kulissenhebel 24 taktmässig hin- und herbewegt. In der Kulisse dieses Kulissenhebels 24 wird eine Kulissenrolle 25 geführt. Letztere trägt einen Zapfen 26, der an seinem freien Ende mit einem Kulissenstein 27 fest verbunden ist. Der Kulissenstein 27 ist zwecks Formatverstellung über eine Gewindespindel 28 mit einem Motor 29 in einer weiteren Kulisse 30 geführt. Die Kulisse 30 wird gebildet durch zwei Langlöcher, die in zwei Platten 31 und 32 eingefräst sind, wobei diese Platten deckungsgleich an gegenüberliegenden Seiten von Trägerstücken 33 und 34 befestigt sind. Die Trägerstücke 33 und 34 weisen jeweils eine Durchgangsbohrung auf, in denen die Gewindespindel 28 zur Verstellung des Kulissensteins 27 geführt und gelagert ist. Der zum Antrieb dieser Spindel 28 vorgesehene Motor 29 ist an einer Konsole 35 befestigt, die wiederum an der Platte 31 angeschweisst ist.

Wie insbesondere die Fig. 3 zeigt, weisen die Trägerstücke 33 und 34 jweils die oberen Kragen 36 und 37 und einen unteren Kragen 38 und 39 auf. Mit diesen Kragen sind die Trägerstücke an mit der Seitenwand 40 über Konsolen 41 fest verbundenen Führungsstangen 42 heb- und senkbar. Zwecks Übertragung der Bewegung auf den Walzenstuhl 43 ist mit der Konsole 35 ein Arm 44 fest verbunden, der mittels eines Klemmstücks 45 an einem Endlos-Zahnriemen 46 angeklemmt ist. Der Zahnriemen 46 angeklemmt ist. Der Zahnriemen 46 ist über vier Zahnscheiben 47 und zwei Umlenkrollen 48 geführt. Wie die Fig. 3 zeigt, sind die Achsen zweier Bahnausgleichswalzen 49 und 50 ebenfalls mit dem Zahnriemen 43 fest verbunden und in Führungen 51 und 52 heb- und senkbar gelagert.

Die von den Vorzugsrollen 53 kontinuierlich geförderte Bahn 54 wird dann durch die Walze 50 taktweise gespeichert und durch die Walze 49 gleichzeitig taktweise an die Vorzugsrollen 55 freigegeben, und zwar derart, dass die Bahn in Förderrichtung gesehen vor den Vorzugsrollen 53 und hinter den Vorzugsrollen 55 kontinuierlich mit gleicher Geschwindigkeit transportiert wird.

Während der Abwärtsbewegung der Walze 50 und der Aufwärtsbewegung der Walze 49 kann dann mittels des Siegelschlittens 56 die in diesem Moment zwischen den Umlenkwalzen 57 und 58 stillestehende Bahn geschweisst werden.

## Patentansprüche

1. Vorrichtung zum Anbringen von Querschweissnähten oder Querschweisstrennähten an schlauch- oder halbschlauchförmigen Folienbahnen aus Kunststoff oder heisssiegelfähigem Material, vorzugsweise zur Herstellung von Beuteln, mit einer Querschweisseinrichtung, zwischen deren taktweise öffnenden und schliessenden Bakken die Folienbahn während der Öffnungszeiten intermittierend hindurchgeführt wird und relativ zu denen sie während der Schweisszeiten stillsteht, und mit einem hin- und herverschwenkten Hebel (9), der über eine Kulissenführung und einen Gleitstein (10) eine von einem umlaufenden exzentrischen Nocken abgeleitete mitlaufende oder gegenläufige Bewegung auf die Querschweisseinrichtung oder die Folienbahn überträgt, dadurch gekennzeichnet, dass der Hebel (9) mit einer radial und geradlinig verlaufenden Führung versehen ist, in der der Gleitstein (10) längsverschiebbar geführt ist, der durch eine gemeinsame Achse (12) mit einem zweiten Gleitstein (15) verbunden ist, dass der zweite Gleitstein (15) in einer geradlinigen Gleitführung (16) läuft, die die Basis eines Dreiecks bildet, dessen Schenkel durch den jeweils in seine Endlage verschwenkten Hebel (9) dargestellt sind, dass die Gleitführung (16) parallel zu sich selbst verschieblich und im Maschinengestell feststellbar ausgebildet ist und dass mit einem der Gleitsteine (10, 15) ein parallel zu sich selbst bleibender Hebel (14) verbunden ist, der die Bewegung auf die Schweisseinrichtung (14') oder die Folienbahn überträgt.

2. Vorrichtung zum Anbringen von Querschweissnähten oder Querschweisstrennähten an schlauch- oder halbschlauchförmigen Folienbahnen aus Kunststoff oder heisssiegelfähigem Material, vorzugsweise zur Herstellung von Beuteln, mit einer Querschweisseinrichtung, zwischen deren taktweise öffnenden und schliessenden Bakken die Folienbahn während der Öffnungszeiten intermittierend hindurchgeführt wird und relativ zu denen sie während der Schweisszeiten stillsteht, und mit einem hin- und herverschwenkten Hebel (24), der über eine Kulissenführung und einen Gleitstein (25) eine von einem umlaufenden exzentrischen Nocken abgeleitete mitlaufende oder gegenläufige Bewegung auf die Querschweisseinrichtung oder die Folienbahn überträgt, dadurch gekennzeichnet, dass der Hebel (24) mit einer radial und geradlinig verlaufenden Führung versehen ist, in der der Gleitstein (25) längsverschieblich geführt ist, dessen Achse (26) in einem Tragstück (31, 32, 33, 34) gelagert ist, das im Maschinengestell längsverschieblich und parallel zu sich selbst geführt ist, dass die Lagerung (27) der Achse (26) in dem Tragstück (31, 32, 33, 34) quer zu dessen Bewegungsrichtung verschieblich und feststellbar und auf der Basis eines Dreiecks bewegbar ist, dessen Schenkel durch den jeweils in seine Endlagen verschwenkten Hebel (24) dargestellt sind, und dass mit dem Tragstück (31, 32, 33, 34) ein parallel zu sich bleibender Hebel (44) verbunden ist, der die Bewegung auf die Schweisseinrichtung oder die Folienbahn (54) überträgt.

3. Vorrichtung nach Anspruch 1 oder 2, dadurch gekennzeichnet, dass die durch die in ihre Endlagen verschwenkten Hebel (9, 24) dargestellten Dreiecke gleichschenkelig sind.

4. Vorrichtung nach Anspruch 1 oder 3, dadurch gekennzeichnet, dass der Hebel aus einer die Gleitsteine (10, 15) tragenden Achse (12) mit einem in Bahnrichtung verfahrbaren Schlitten (14') verbindenden Koppel (14) besteht, der die Schweisseinrichtung trägt.

5. Vorrichtung nach einem der Ansprüche 1, 3 oder 4, dadurch gekennzeichnet, dass die Gleitführung (16) über Führungsbohrungen auf gestellfesten Stangen (19, 20) verschieblich und feststellbar ist.

6. Vorrichtung nach einem der Ansprüche 1 oder 3 bis 5, dadurch gekennzeichnet, dass zur Verschiebung der Gleitführung (16) auf den Führungsstangen (19, 20) ein Antrieb vorgesehen ist.

7. Vorrichtung nach einem der Ansprüche 1 oder 3 bis 6, dadurch gekennzeichnet, dass die Koppel (14) entsprechend der jeweiligen Stellung der Gleitführung (16) verlängerbar oder verkürzbar ist.

8. Vorrichtung nach Anspruch 2, dadurch gekennzeichnet, dass der Hebel (44) mit einem Zahnriemen (46) oder dergleichen verbunden ist, der in einem Walzenstuhl in zwei zueinander parallelen Führungen (51, 52) heb- und senkbar gelagerte Tänzerwalzen (49, 50), über die die Folienbahn (54) läuft, gegensinnig in der Weise hebt und senkt, dass zwischen den Tänzerwalzen (49, 50) die Folienbahn (54) zum Anbringen der Querschweissnähte intermittierend stillsteht.

9. Vorrichtung nach einem der Ansprüche 2 oder 8, dadurch gekennzeichnet, dass zum Verstellen der Lagerung (27) in dem Tragstück (31, 32, 33, 34) eine von einem Antrieb (29) betätigbare Spindel (28) vorgesehen ist.

10. Vorrichtung nach einem der Ansprüche 2, 8 oder 9, dadurch gekennzeichnet, dass das Tragstück (31, 32, 33, 34) auf zueinander parallelen Führungsstangen (42) verschieblich gelagert ist.

11. Vorrichtung nach einem der vorstehenden Ansprüche, dadurch gekennzeichnet, dass der Hebel (9, 24) als zweiarmiger Hebel ausgebildet ist, dessen einer Arm mit von der Nockenkurve verschwenkten Nockenrollen (6, 23) und dessen anderer Arm mit der Gleitführung für den Gleitstein versehen ist.

12. Vorrichtung nach einem der vorstehenden Ansprüche, dadurch gekennzeichnet, dass ein Arm zwei Nockenrollen (6, 23) trägt, die zwischen sich eine umlaufende exzentrische Stegkurve (2, 22) einfassen.

## Revendications

1. Dispositif pour appliquer des soudages transversaux ou des soudages de séparation transversaux sur des bandes de film tubulaire ou semi-tubulaire de matière plastique ou de matière apte à être soudée à chaud, de préférence pour la fabrication de sacs, comportant un dispositif de soudage transversal ayant des mâchoires s'ouvrant et se fermant de manière cyclique, mâchoires que la bande de film traverse par intermittence pendant les temps d'ouverture alors que la bande de films est stationnaire par rapport aux mâchoires pendant les temps de soudage, comportant en outre un levier (9) basculant en va-et-vient qui au moyen d'un guidage à coulisse et d'un coulisseau (10) dérive un mouvement à partir d'une came à rotation excentrique et transmet le mouvement dans le même sens ou le sens opposé au dispositif de soudage transversal ou à la bande de film, caractérisé en ce que le levier (9) est pourvu d'un guidage radial en ligne droite dans lequel le coulisseau (10) est guidé pour effectuer un mouvement longitudinal, le coulisseau étant relié à un deuxième coulisseau (15) par un pivot (12) commun, le deuxième coulisseau (15) étant mobile dans un guidage en ligne droite (16) qui constitue la base d'un triangle dont les côtés sont représentés par le levier (9) basculé dans ses positions finales, que le guidage (16) peut être déplacé par rapport à lui-même et est adapté pour être fixé au bâti de la machine, et qu'un des coulisseaux (10, 15) est relié à un levier (14) qui reste parallèlement par rapport à lui-même et transmet le mouvement au dispositif de soudage (14') ou à la bande de film.

2. Dispositif pour appliquer des soudages transversaux ou des soudages de séparation transversaux sur des bandes de film tubulaire ou semi-tubulaire de matière plastique ou de matière apte à être soudée à chaud, de préférence pour la fabrication de sacs, comportant un dispositif de soudage transversal ayant des mâchoires s'ouvrant et se fermant de manière cyclique, mâchoires que la bande de film traverse par intermittence pendant les temps d'ouverture alors que la bande de film est stationnaire par rapport aux mâchoires pendant les temps de soudage, comportant en outre un levier (24) basculant en va-et-vient qui au moyen d'un guidage à coulisse et d'un coulisseau (25) dérive un mouvement à partir d'une came à rotation excentrique et transmet le mouvement dans le même sens ou le sens opposé au dispositif de soudage transversal ou à la bande de film, caractérisé en ce que le levier (24) est pourvu d'un guidage radial et rectiligne dans lequel se déplace le coulisseau (25) en sens longitudinal, levier dont le pivot (26) est logé dans une pièce de support (31, 32, 33, 34) qui est guidé dans le bâti de machine de manière à pouvoir être déplacé dans le sens longitudinal et parallèlement par rapport à lui-même, que l'appui (27) du pivot (26) dans la pièce de support (31, 32, 33, 34) peut être déplacé et fixé transversalement par rapport au sens du mouvement de la pièce de support et peut être déplacé sur la base d'un triangle dont les côtés sont constitués par le levier (24) basculé dans ses positions terminales, et qu'un levier (44) restant parallèle par rapport à lui-même est fixé à la pièce de support (31, 32, 33, 34), qui transmet le mouvement au dispositif de soudage ou à la bande de film (54).

3. Dispositif selon la revendication 1 ou 2, caractérisé en ce que les triangles définis par les leviers (9, 24) basculés en leurs positions terminales sont isocèles.

4. Dispositif selon la revendication 1 ou 2, caractérisé en ce que le levier consiste en une liaison (14) qui raccorde le pivot (12) portant les coulisseaux (10, 15) à un chariot (14') qui se déplace le long de la bande et porte la partie de soudage.

5. Dispositif selon l'une des revendications 1, 3 ou 4, caractérisé en ce que le guidage (16) peut être déplacé et fixé au moyen d'alésages de guidage sur des barres (19, 20) solidaires du bâti.

6. Dispositif selon l'une des revendications 1 ou 3 à 5, caractérisé en ce qu'un entraînement est prévu pour le déplacement du guidage (16) sur les barres de guidage (19, 20).

7. Dispositif selon l'une des revendications 1 ou 3 à 6, caractérisé en ce que la liaison (14) peut être rallongée ou raccourcie en fonction de la position du guidage (16).

8. Dispositif selon la revendication 2, caractérisé en ce que le levier (44) est relié à une courroie crantée (46) ou à un dispositif semblable, que la bande de film (54) passe sur des rouleaux compensateurs (49, 50) qui sont montés de façon mobile dans deux guidages parallèles (51, 52) prévus dans un chariot à rouleaux, de manière à ce que les rouleaux compensateurs peuvent être relevés et abaissés, et que ladite courroie crantée est disposée de manière à relever et à abaisser lesdits rouleaux compensateurs en direction réciproquement opposée de sorte que la bande de film (54) est arrêtée par intermittence entre les rouleaux compensateurs (49, 50) afin de permettre l'exécution des soudures transversales.

9. Dispositif selon l'une des revendications 2 ou 8, caractérisé en ce qu'une broche (28) est prévue qui est actionnée par un dispositif d'entraînement (29) et sert à ajuster l'appui (27) dans la pièce de support (31, 32, 33, 34).

10. Dispositif selon l'une des revendications 2, 8 ou 9, caractérisé en ce que la pièce de support (31, 32, 33, 34) est montée sur deux barres de guidage parallèles (42) pour le déplacement par rapport à celles-ci.

11. Dispositif selon l'une des revendications précédentes, caractérisé en ce que le levier (9, 24) est formé comme levier à deux bras dont un des bras est pourvu de rouleaux à came (6, 23) qui sont pivotés par la came et dont l'autre bras est pourvu du guidage pour le coulisseau.

12. Dispositif selon l'une des revendications précédentes, caractérisé en ce qu'un bras porte deux rouleaux à came (6, 23) qui bordent une nervure à came excentrique (2, 22) circulant entre eux.

## Claims

1. Apparatus for providing transverse seam weld or transverse seams made by hot wire welding in tubular or semitubular film webs made of plastics or heat-sealable material, preferably in the manufacture of bags, comprising a transverse welding apparatus having cyclically opening and closing jaws, between which the film web is intermittently moved during the times in which the jaws are open, whereas the film web is stationary relative to the jaws during the welding times, and comprising a pivotally reciprocable lever (9), which by means of a cam slot and a slider (10) derives a movement from a revolving eccentric cam and transmits said movement in the same or opposite direction to the transverse welding apparatus or to the film web, characterized in that the lever (9) is provided with a straight radial track, in which the slider (10) is guided for a longitudinal sliding movement, the slider is connected to a second slider (15) by a common pivot (12), the second slider (15) is movable in a straight slide track (16), which constitutes the base of a triangle having legs which are represented by the lever (9) in respective end positions, the slide track (16) is displaceable relative to itself and adapted to be fixed in the machine frame, and one of the sliders (10, 15) is connected to a lever (14), which remains parallel to itself and transmits the movement to the welding apparatus (14') or to the film web.

2. Apparatus for providing transverse seam welds or transverse seams made by hot wire welding in tubular or semitubular film webs made of plastics or heat-sealable material, preferably in the manufacture of bags, comprising a transverse welding apparatus having cyclically opening and closing jaws, between which the film web is intermittently moved during the times in which the jaws are open, whereas the film web is stationary relative to the jaws during the welding times, and comprising a pivotally reciprocable lever (24), which by means of a cam slot and a slider (27) derives a movement from a revolving eccentric cam and transmits said movement in the same or opposite direction to the transverse welding apparatus or to the film web, characterized in that the lever (24) is provided with a straight radial track, in which the slider (25) is guided for a longitudinal sliding movement, the pivot (26) of the slider is movably mounted in a bracket (31, 32, 33, 34), which is guided in the machine frame to be longitudinally slidable parallel to itself, the bearing means (27) for mounting the pivot (26) in the bracket (31, 32, 33, 34) are displaceable transversely to the direction of movement of the bracket and adapted to be fixed in position and are movable along the base of a triangle having legs which are represented by the lever (24) in respective end positions, and the bracket (31, 32, 33, 34) is connected to a lever (44), which remains parallel to itself and transmits the movement to the welding apparatus or the film web (54).

3. Apparatus according to claim 1 or 2, characterized in that the triangles defined by the levers (9, 24) pivotally moved to their end positions are isosceles.

4. Apparatus according to claim 1 or 3, characterized in that the lever concists of a link (14), which connects the pivot (12) carrying the sliders (10, 15) to a carriage (14'), which is movable along the web and carries the welding apparatus.

5. Apparatus according to any of claims 1, 3 and 4, characterized in that the slide track (16) is displaceable by means of guide bores on rods (19, 20), which are fixed to the frame, and is adapted to be fixed in position.

6. Apparatus according to any of claims 1 and 3 to 5, characterized in that drive means are provided for displacing the slide track (16) on the guide rods (19, 20).

7. Apparatus according to any of claims 1 and 3 to 6, characterized in that the link (14) is adapted to be extended or shortened in dependence on the instantaneous position of the slide track (16).

8. Apparatus according to claim 2, characterized in that the lever (44) is connected to a cogged belt (46) or the like, the film web (54) is trained around dancer rollers (49, 50), which are movably mounted in two parallel tracks (51, 52) provided in a roller frame, so that said dancer rollers can be raised and lowered, and said cogged belt is arranged to raise and lower said dancer rollers in mutually opposite directions in such a manner that the film web (54) is intermittently arrested between the dancer rollers (49, 50) to permit the provision of the transverse seam welds.

9. Apparatus according to claim 2 or 8, characterized in that a screw (28) is provided, which is operable by drive means (29) and serves to adjust the bearing means (27) in the bracket (31, 32, 33, 34).

10. Apparatus according to any of claims 2, 8 and 9, characterized in that the bracket (31, 32, 33, 34) is mounted on two parallel guide rods (42) for a displacement relative thereto.

11. Apparatus according to any of the preceding claims, characterized in that the lever (9, 24) consists of a two-armed lever, one arm of which is provided with cam follower rollers (6, 23), which are pivotally moved by the cam, whereas the other arm is provided with the slide track for the slider.

12. Apparatus according to any of the preceding claims, characterized in that one arm carries two cam follower rollers (6, 23), which engage in interposed eccentric cam rib (2, 22).

1/4

FIG.1

FIG. 2

FIG.3

4/4

FIG. 4